# EUROPEAN PATENT APPLICATION

(11) **EP 3 299 190 A1**
(43) Date of publication of application: **28.03.2018**
(21) Application number: 17192164.6
(22) Date of filing: 20.09.2017
(51) Int. Cl.: B60D 1/00

(54) **IMPROVED HITCH SYSTEM FOR TROLLEYS**

(30) Priority: 21.09.2016 IT 201600094526
(71) Applicant: Logistica Paggiola Srl, 30020 Torre di Mosto (VE) (IT)
(72) Inventor: PAGGIOLA, Claudio, 30020 TORRE DI MOSTO (VE) (IT)
(74) Representative: Vinci, Marcello

(57) **Abstract**

The invention is a hitch system (A) for trolleys, comprising a drawbar (2) and a coupling body (1), the latter in turn comprising at least one coupling pin (13) suited to be introduced in the hole(24) made in the free end (23) of the drawbar (2). Said coupling body (1) also comprises an inclined wall (14) that serves as a sliding guide for the free end (23) of said drawbar (2) which, during the coupling step, slides on the inclined wall, moving upwards along it until said hole (24) made in the end (23) of the drawbar (2) comes to be positioned at the level of said coupling pin (13), and moving further upwards so as to allow said pin (13) to be introduced in said hole (24).

## Description

This patent relates to a hitch system for trolleys and in particular relates to an improved trolley hitch system.

The new hitch system is particularly applicable to postal trolleys.

Trolleys of the prior art, and in particular postal trolleys, comprise a frame equipped with rotating wheels and containment basket, a drawbar, generally attached to the front of the frame, and a hook mounted to the rear of the frame suited to hitch the drawbar of a trolley behind it.

Trolleys of the prior art have a drawbar formed by an elongated body placed in the direction of movement of the trolley, where the drawbar is hinged with one end at the lower front of the trolley frame so that it can rotate around a horizontal axis and orthogonal to the direction of movement.

The drawbar is generally loaded by means of a spring mounted on the hinge that keeps it oriented substantially upward, aligned with the front of the trolley.

The free end of the drawbar is equipped with a hitch hole.

The hitch is generally comprised of a vertical pin rigidly secured to the lower rear part of the trolley frame and oriented downward, suitable for the insertion from below in the hole of the free end of the drawbar.

To hitch the drawbar, the latter must be rotated downward, counteracting the action of the spring until the hole is positioned at the pin and then released, so that the spring action raises the drawbar, causing the insertion of the pin into the hole and thus hitching.

The spring's action keeps the drawbar in contact with the bottom edge of the frame so that the drawbar remains hitched to the trolley ahead of it, particularly during towing.

The prior art comprises hitching systems where the hitch comprises a housing for the free end of the drawbar.

This housing is rigidly fixed to the lower rear part of the frame and comprises a box-like body containing a vertical pin facing downward, this box-like body being formed by two vertical walls arranged laterally with respect to the vertical pin, one lower horizontal wall positioned below the pin, one vertical bottom wall with a hole.

During towing, the end of the drawbar is retained by the action of the spring.

When pushing, in contrast, when the two trolleys come together, the end of the drawbar, equipped with a slotted or elongated hole, translates with respect to the pin, so that the end of the drawbar engages and locks in the hole of the lower wall.

In this way, when pushing, the drawbar is not likely to unlatch from the pin, but remains locked in the hole, where further vertical movements are prevented.

EP 1852282A1 relates to a trolley hitching system comprising a drawbar with a free end equipped with a hole, a coupling body comprising a downward facing pin, and a wall hinged to the body of the coupling body. A spring normally holds the wall in a horizontal position and in contact with the lower end of the pin.

To hitch or unhitch the drawbar, the operator pushes the drawbar against the edge of the wall pushing it downward, so that it takes on an inclined configuration. Once the drawbar is hitched, it tends to lift up because of its springs and the wall rises back up horizontally, preventing the drawbar from sliding out.

The hitch illustrated herein therefore comprises movable parts, in particular the spring of the hinged closure wall, which over time may jam, thereby preventing the wall from opening, or break, preventing the wall from closing.

DE 202014100101 relates to a hitching system equipped with vertical angled walls that serve as a lateral containment for the drawbar.

The object of this patent is a new type of hitch system for trolleys, and particularly for postal trolleys, which addresses the drawbacks of the prior art.

The main object of the present invention is to guide the operator to the rapid hitching of the end of the drawbar of a first trolley to the coupling pin of a second trolley.

Another object of the present invention is to allow the quick release of the end of the drawbar from the coupling pin.

One advantage of the present invention is that it is free of moving parts that may be jammed or broken.

These and other objects, direct and complementary, are achieved by the new type of hitch system for trolleys, and particularly for postal trolleys, comprising in its main parts a drawbar, suitable to be attached to the front of a trolley, and a coupling body suited to be secured to the back of a second trolley, the coupling body in turn comprising:
- at least one substantially vertical and downward facing coupling pin, secured to the lower rear end of a trolley, for the hitching from below of the free end of the drawbar equipped with a hole,
- at least one inclined fixed wall, positioned below the pin, leaving a space between the inclined wall and the pin for the insertion of the end of the drawbar, where this inclined wall forms, with respect to the support plane of the trolley, an acute angle facing the front of the trolley, this inclined wall being constrained to the lower rear end of the trolley,
and wherein the inclined wall serves as a guideway for the free end of the drawbar at least while hitching, during which the free end slides upward on the inclined wall, until the hole is aligned with the coupling pin, where the drawbar can be pushed up, into the locking position, with the pin inserted in the hole.

The drawbar is hinged to the front wall of the trolley in a rotatable manner around a horizontal axis and orthogonal to the direction of movement of the trolley, and where the drawbar is preloaded by means of one or more elastic means suited to keep the drawbar in a resting position, for example facing upwards, close to the front of the trolley.

In particular, these elastic means are one or more springs mounted on the drawbar hinge.

To implement the coupling, lower the drawbar by counteracting the action of the spring, until the end of the drawbar is brought to the height of the inclined wall at its lowest end.

The spring action tends to lift the drawbar so that its free end slides up along the inclined wall, advancing until the hole is at the coupling pin, where the spring action raises the drawbar causing the pin to be inserted in the hole and thus the rapid and automatic coupling.

The spring action keeps the drawbar in its hitched position.

To facilitate hitching, the coupling body also comprises lateral walls or elements rigidly connected to the inclined wall at the lower part of the frame, placed laterally to the coupling pin, having the function of limiting the lateral displacements of the end of the drawbar.

To disengage the drawbar, the operator must operate in the opposite manner, that is, the drawbar is lowered counteracting the spring action, until the free end of the drawbar comes in contact with the inclined wall and where, sliding downwards along the inclined wall the end of the drawbar lowers and retracts until the pin comes out of the hole. Moving back further, the end of the drawbar extends beyond the pin, so that the spring action can lift the drawbar back to its resting position, not hitched to the trolley.

The drawbar is therefore always free to be lowered for release, and its end is never constrained in constrictive seats that would prevent its vertical movement, thereby also preventing the quick release of the drawbar.

To facilitate the lowering of the drawbar, counteracting the action of the spring, the drawbar may also comprise at least one footboard or enlarged portion rigidly constrained to the drawbar body, suited to support a hand or more advantageously a foot.

The operator places a foot on the footboard and pushes down, so that both hands are free to hold onto the trolleys to hitch.

According to one possible embodiment, this drawbar may also include at least one stroke limiter or limit stop element mounted near the hinged end of the drawbar and suited to limit the rotation of the drawbar itself until the end of the drawbar is located at a minimum height from the ground, to which it is able to rest on the inclined wall of the hitch of a second trolley.

In this way, the operator, lowering the drawbar with a foot or with a hand, does not have to worry about having reached the right height to make the coupling, but must lower the drawbar to the limiter to carry out the coupling.

To hitch the drawbar the operator lowers it up to the limiter, and brings the two trolleys together so that the lowered end of the drawbar rests on the inclined wall.

Bringing the trolleys together, the end of the drawbar slides and rises along the inclined wall until the pin automatically slides into the hole due to the elastic action of the spring, thereby coupling the two trolleys.

Conversely, in order to unhitch the two trolleys, the operator must simply lower the drawbar, the end of which, coming into contact with the inclined wall, slides down along it, and uncouples from the pin. At that point the drawbar can be released, allowing it to return to its unhitched resting position.

The characteristics of the present invention will be better clarified by the following description with reference to the drawings, attached by way of a non-limiting example.

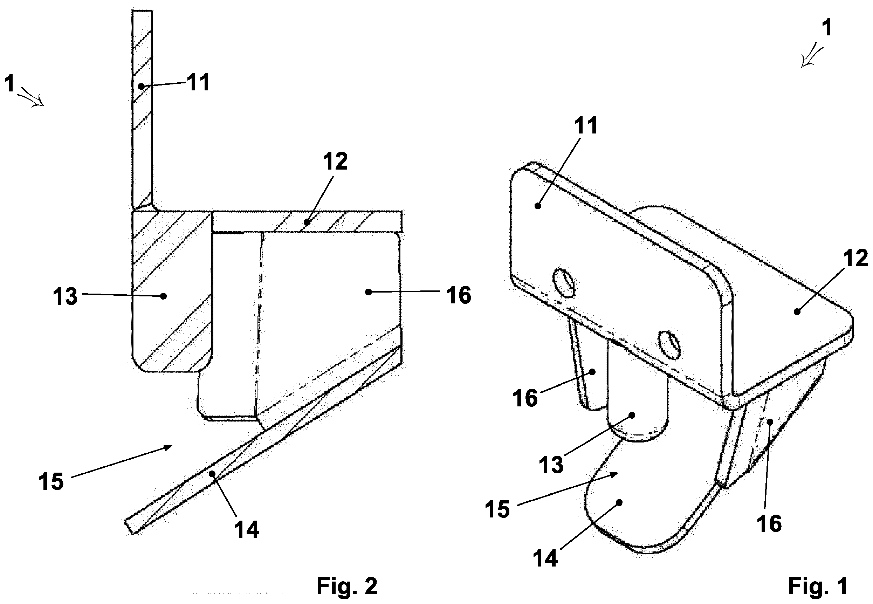

Figures 1 and 2 show two views, respectively three-dimensional and in section, of just the coupling body (1).
Figures 3 and 4 show two side views of the drawbar (2) in a resting position, that is, facing upwards, where it is held by the action of at least one spring (3).
Figures 5, 6, 7 and 8 show the hitching system (A) in section, in the various possible positions, respectively, the hitching position (Figure 5), the retracted towing position (Figure 6) in which the drawbar (2) remains attached to the pin (13) due to the action of the spring (3), the advanced braking position (Figure 7) in which the drawbar (2) is shifted forward towards the trolley in front of it, and the unhitching position (Figure 8).
Figure 9 shows that the system (A) may also comprise a stroke limiter or limit stop element (4) to limit the downward rotation of the drawbar (2).

The new hitching system (A) for trolleys comprises a drawbar (2), which is suited to be fastened to the front of a trolley, this drawbar (2) comprising an elongated body (21), constraint means (22) suited to hinging the elongated body (21) to the trolley in a rotatable manner around a horizontal axis and orthogonal to the direction of forward movement.

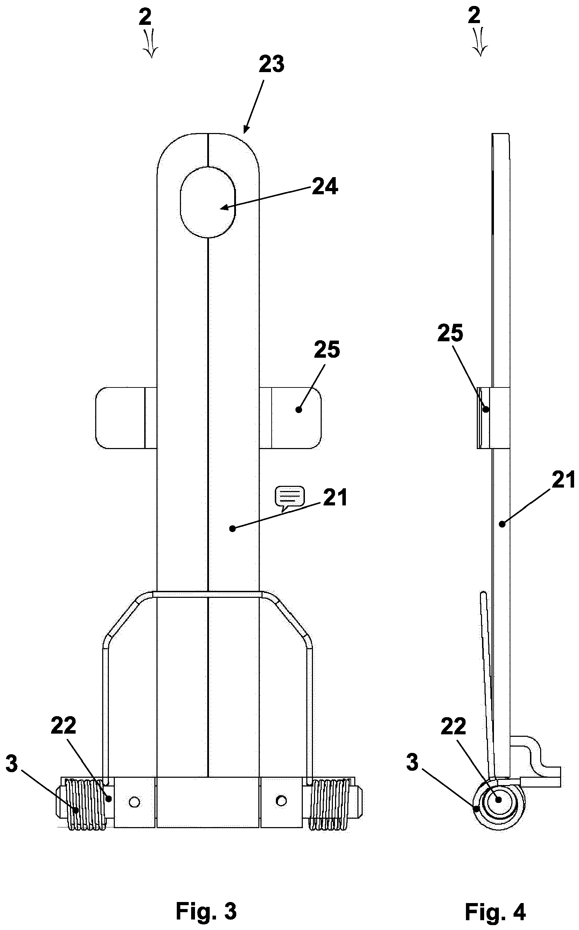

These constraint means (22) also comprise at least one spring (3) or elastic means suited to counter the downward rotation of the drawbar (2), and able to hold the drawbar (2) in a resting position, that is facing upwards as in Figure 4.

The free end (23) of the drawbar (2) is equipped with a through hole (24), preferably with an elongated or slotted shape in the longitudinal direction of the elongated body (21).

The drawbar (2) comprises at least one footboard or enlarged part (25) rigidly constrained to the elongated body (21) at any intermediate position along the drawbar, such as in an intermediate position, to support the user's hand or more advantageously foot.

This hitch system also comprises at least one coupling body (1) suited to be constrained to the rear of a second trolley and in turn comprising fastening members (11, 12) suited to be directly or indirectly rigidly constrained to the lower rear part of the trolley.

The coupling body (1) comprises at least one substantially vertical and downward facing coupling pin (13) for the coupling from below of the free end (23) of the drawbar (2) equipped with a hole (24).

The coupling body (1) also comprises at least one fixed inclined wall (14) located below the pin (13), leaving a space (15) between the inclined wall itself and the pin for the insertion of the end of the drawbar.

This inclined wall (14) is positioned so as to form, with respect to the support surface of the trolley, a fixed acute angle facing the front of the trolley on which the coupling body (1) is mounted.

This coupling body (1) also comprises rigidly-connected side walls or elements (16) of the inclined wall (14) to the fastening parts (12), which are positioned laterally with respect to the pin (13).

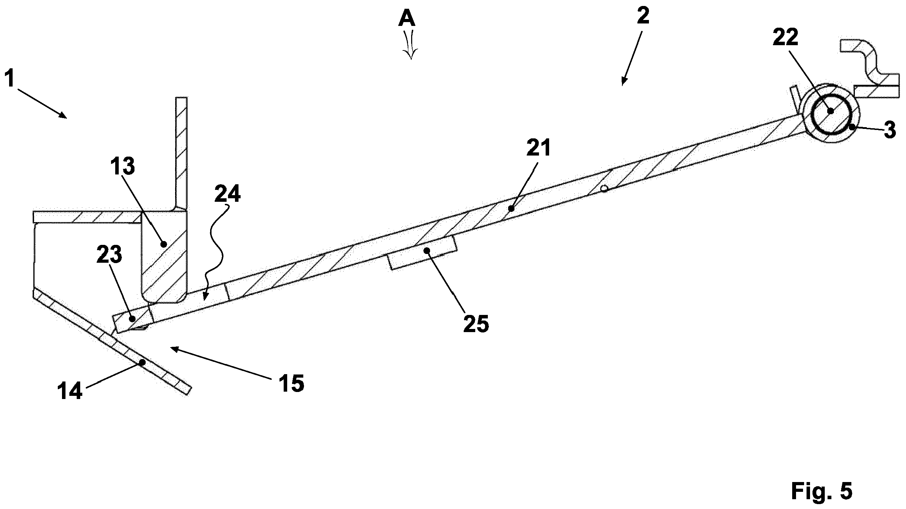

As illustrated in Figure 5, the inclined wall (14) serves as a sliding guide for the free end (23) of the drawbar (2) when in the hitching phase and, in the opposite direction, in the unhitching phase.

Coupling and uncoupling is permitted with the drawbar (2) in the retracted position with respect to the pin (13).

As a result of the action of the spring (3), the end (23) slides along the inclined wall (14) until the hole (24) is aligned with the coupling pin (13) (Figure 5).

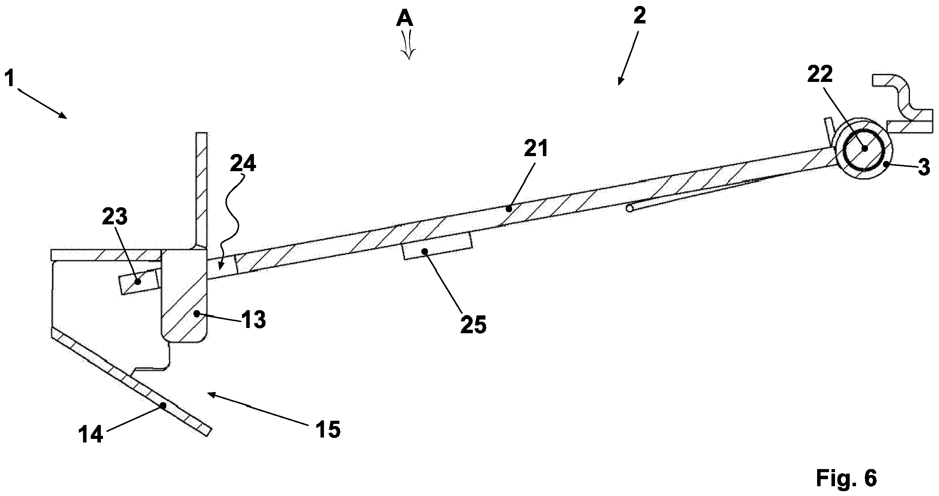

In the towing stage, the slotted hole (24) allows a relative translation of the drawbar (2), which is in the retracted position with respect to the pin (13), while the spring action retains the drawbar in the coupled position (Figure 6).

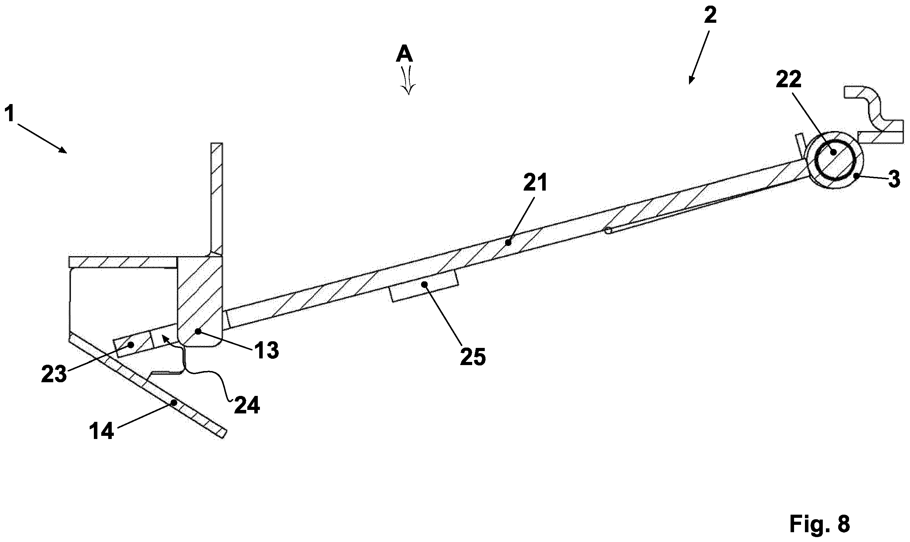

To uncouple the drawbar, operate in the opposite manner, that is, lower the drawbar (2) by counteracting the action of the spring (3), until the free end (23) of the drawbar (2) comes into contact with the inclined wall (14), and where, sliding downward along the inclined wall (14), the end (23) of the drawbar (2) lowers and retracts (Figure 8) until the pin comes out of the hole. Retracting further, the end (23) of the drawbar (2) goes beyond the pin so that the spring action (3) can lift the drawbar (2) back to its resting position (Figure 4), not hitched to the trolley.

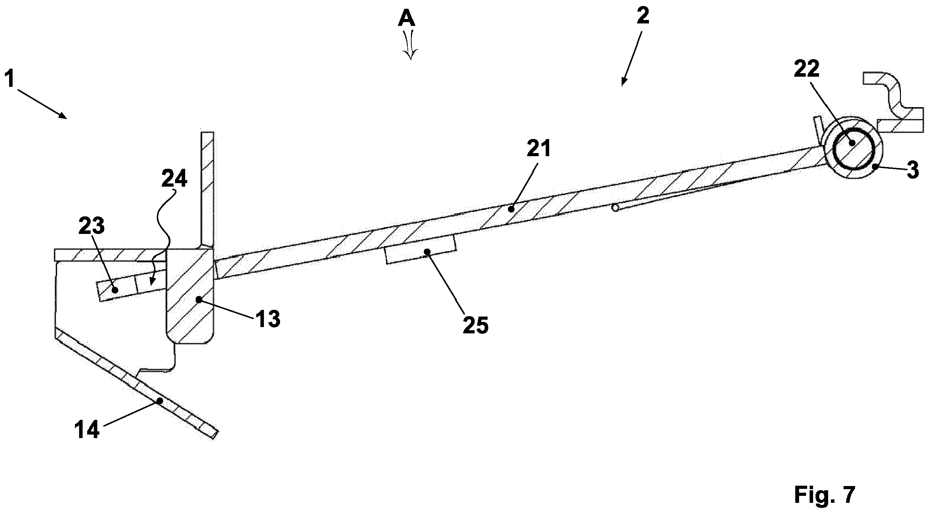

In the braking or reverse phase, however, the drawbar (2) moves in an advanced position with respect to the pin (13) (Figure 7).

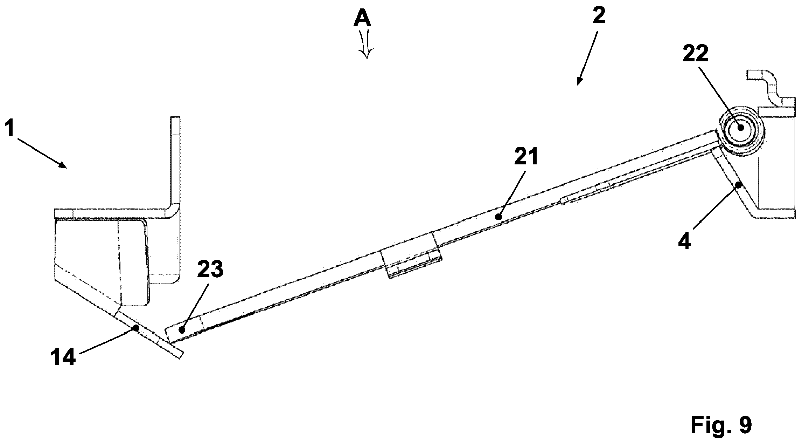

This hitch system (A) may or may not necessarily also comprise a stroke limiter or limit stop element (4), shown for convenience only in Figure 9, suited to limit the downward rotation of the drawbar (2) to the position in which the end (23) of the drawbar (2) is at a minimum height from the ground at least corresponding to the minimum height of the inclined wall (14).

This stroke limiter (4) may for example be mounted on a fixed part with respect to the drawbar (2), for example on the constraint means (22) of the drawbar (2) or on the trolley.

Therefore, with reference to the preceding description and the attached drawings, the following claims are made.

## Claims

1. Hitch system (A) for trolleys, comprising a drawbar (2) intended to be constrained to the front part of a trolley, with a free end (23) provided with a hole (24), a coupling body (1) intended to be constrained to the rear part of a second trolley, said coupling body in turn comprising at least one substantially vertical coupling pin (13) suited to be introduced in said hole (24) made in the free end (23) of the drawbar (2), **characterized in that** said coupling body (1) also comprises at least one inclined wall (14) positioned under said pin (13) so as to leave a space (15) between the inclined wall (14) itself and the pin (13) for the insertion of the end (23) of the drawbar (2), wherein said inclined wall (14) forms, with respect to the surface on which the trolley rests, an acute angle facing towards the front part of the trolley on which it is mounted, and wherein said inclined wall (14) serves as a sliding guide for the free end (23) of said drawbar (2) at least during the coupling step, during which said end (23) of the drawbar (2) slides on the inclined wall, moving upwards along it until said hole (24) made in the end (23) of the drawbar (2) comes to be positioned at the level of said coupling pin (13), and moving further upwards so as to allow said pin (13) to be introduced in said hole(24).

2. Hitch system (A) for trolleys according to claim 1, **characterized in that** said drawbar (2) is hinged to the front side of the trolley in such a way that it rotates around a horizontal axis that is orthogonal to the direction of advance of the trolley, and wherein said drawbar is preloaded through one or more elastic means or springs (3) suited to hold said drawbar (2) in a rest position generically facing upwards, and wherein during the coupling step the action of said elastic means (3) causes said end (23) of the drawbar (2) to move upwards along said inclined wall (14) and to be coupled with said pin (13).

3. Hitch system (A) for trolleys according to claim 1 or 2, **characterized in that** said hole (24) made in the end (23) of the drawbar (2) is slotted or elongated according to the longitudinal direction of the drawbar (2), in such a way that, with the pin (13) introduced in said hole (24), said drawbar (2) can translate from a backward position with respect to the pin (13), in which the uncoupling of said drawbar (2) is allowed, meaning the passage of said end (23) of the drawbar (2) between said inclined wall (14) and said pin (13), to a forward position with respect to the pin (13), in which the uncoupling of said drawbar (2) is not allowed, meaning the passage of said end (23) between said inclined wall (14) and said pin (13).

4. Hitch system (A) for trolleys according to any of the preceding claims, **characterized in that** said coupling body (1) comprises also fixing parts (11, 12) suited to fix it to the lower and rear part of the trolley, and one or more sides or lateral elements (16) for the rigid connection of said inclined wall (14) to said fixing parts (11, 12), said side elements (6) being positioned laterally with respect to said pin (13) in order to limit laterally the positioning of the end (23) of the drawbar (2).

5. Hitch system (A) for trolleys according to any of the preceding claims, **characterized in that** said drawbar (2) comprises at least one footboard or enlarged portion (25) rigidly constrained to the elongated body (21) of the drawbar (2) in an intermediate position, so that it is possible to place a hand or more advantageously a foot thereon and exert a force intended to counteract the action of said one or more elastic means (3).

6. Hitch system (A) for trolleys according to any of the preceding claims, **characterized in that** it comprises also at least one stop element or limiting element (4) suited to limit the downward rotation of the drawbar (2) to the position in which the end (23) of the drawbar (2) is at the minimum height from the ground, corresponding to the minimum height of said inclined wall (14).
